# EUROPÄISCHE PATENTSCHRIFT

(11) **EP 1 291 612 B1**
(45) Veröffentlichungstag und Bekanntmachung des Hinweises auf die Patenterteilung: **12.01.2005**
(21) Anmeldenummer: 02019799.2
(22) Anmeldetag: 05.09.2002
(51) Int. Cl.: F42B 3/04, B60R 21/26

(54) **Hybrid-Gasgenerator**
Hybrid gas generator
Générateur de gaz hybride

(30) Priorität: 05.09.2001 DE 20114664 U
(43) Veröffentlichungstag der Anmeldung: 12.03.2003
(73) Patentinhaber: TRW Airbag Systems GmbH, 84544 Aschau am Inn (DE)
(72) Erfinder: Dölling, Uwe, 84539 Ampfing (DE); Bergmann, Maximilian, 84453 Mühldorf/Inn (DE); Gerstner, Alexander, 84478 Waldkraiburg (DE); Zengerle, Werner, 93057 Regensburg (DE); Seidl, Lorenz, 84478 Waldkraiburg (DE)
(74) Vertreter: Kitzhofer, Thomas, Dipl.-Ing.

(56) Entgegenhaltungen:
- DE-A- 19 545 494
- DE-A- 19 853 080
- US-A- 5 002 085
- US-A- 6 042 146

## Beschreibung

Die Erfindung betrifft einen Hybrid-Gasgenerator mit einer Kammer mit unter Druck befindlichem Fluid, die durch eine zerstörbare Membrane verschlossen ist, einem pyrotechnischen Treibsatz, der bei Zündung die Membrane zerstört, und mit einem zwischen Treibsatz und Membrane angeordneten Düsenwandung mit wenigstens einer Durchgangsöffnung, durch die die beim Zünden des Treibsatzes entstehenden Verbrennungsprodukte in Richtung Membrane strömen.

Solch ein Hybrid-Gasgenerator ist z.B aus der US-A 6 042 146 bekannt.

Diese Hybrid-Gasgeneratoren arbeiten üblicherweise mit Druckgas, das sich beim Ausströmen mit den heißen Verbrennungsprodukten des Treibsatzes vermischt. Das entstehende Mischgas gelangt dann in ein Rückhaltemittel, beispielsweise einen Gassack oder eine Kammer eines Antriebs zum Betätigen eines Fahrzeuginsassen-Rückhaltemittels. Die Durchgangsöffnungen in der Düsenwandung haben die Aufgabe, den entstehenden Strom aus Verbrennungsprodukten gezielt auf die Membrane zu richten, um diese möglichst schnell zu öffnen. Bislang werden auf einem Kreis liegende bogenförmige Durchgangsöffnungen gleichmäßig und gering voneinander beabstandet, so daß aus der Membrane eine kreisförmige Scheibe durch die Verbrennungsprodukte herausgetrennt wird. Der Vorteil einer solchen Anordnung besteht darin, daß sehr schnell eine sehr große Öffnung in der Membrane erzeugt wird und folglich sehr schnell eine große Menge Druckfluid aus der Kammer entweichen kann. Die sogenannten entstehenden freien Abschnitte der Membrane sind solche Abschnitte, die nicht am Rand der Membrane befestigt bleiben, sondern mit dem Fluid- und Gasstrom mitgerissen werden und in ein nachgeordnetes Filter gelangen, das sie partiell verstopfen. Der Rand der Membrane kann auch durch einen ringförmigen Haltering gebildet sein, der mit der Membranhaut zu einer vormontierten Einheit einstückig verbunden ist.

Durch die Erfindung wird es möglich, einen kleineren und leichteren Hybrid-Gasgenerator bei hoher Leistungsfähigkeit zu bauen. Dies wird bei einem Hybrid-Gasgenerator der eingangs genannten Art dadurch ermöglicht, daß die Durchgangsöffnung eine solche Form hat und so zur Membrane ausgerichtet ist, daß beim Zerstören der Membrane ausschließlich Abschnitte entstehen, die mit dem Rand der Membrane verbunden bleiben. Während im Stand der Technik gezielt im Hinblick auf das Erzeugen einer möglichst großen Öffnung in der Membrane wenigstens ein nicht mehr mit dem Rand verbundener freier Abschnitt erzeugt wird, geht die Erfindung einen anderen Weg. Erfindungsgemäß werden keine solchen freien Abschnitte mehr erzeugt, vielmehr wird durch die besondere Anordnung und Geometrie der Durchgangsöffnung oder mehrere Durchgangsöffnungen ausschließlich Abschnitte gebildet, die mit dem Rand der Membrane verbunden bleiben, welcher ohnehin bleibend mit einer feststehenden Wand im Inneren des Gasgenerators verbunden ist. Dadurch, daß keine freien Segmente der Membrane entstehen, kann das üblicherweise vorgesehene Filter wesentlich weniger leistungsfähig ausgebildet sein oder, wie es die Erfindung vorzugsweise vorsieht, ganz entfallen. Bereits ein weniger leistungsfähiges, grobmaschigeres Filter spart Gewicht und Bauraum, mit dem Entfallen des Filters kann sogar auf eine bislang vorgesehene Filterkammer vollständig verzichtet werden.

Die Durchgangsöffnung verläuft im wesentlichen parallel zum Rand der scheibenförmigen Membrane.

Aus der Membrane wird aufgrund der Anordnung und Geometrie der Durchgangsöffnung vorzugsweise ein Zentrumsabschnitt herausgetrennt, der über einen Steg (nicht von Verbrennungsprodukten angeblasener Bereich) mit dem Rand der Membrane verbunden bleibt. Der Zentrumsabschnitt klappt dann beim Öffnen nach außen, ohne vom Fluidstrom oder dem Strom aus Verbrennungsprodukten mitgerissen zu werden.

Vorzugsweise sind mehrere bogenförmige oder ringsegmentförmige, in Umfangsrichtung aneinander angrenzende, Durchgangsöffnungen vorgesehen, von denen wenigstens zwei einen solch großen Abstand haben, daß ein aus der Membrane herausgetrennter Zentrumsabschnitt über einen Steg mit dem Rand der Membrane verbunden bleibt.

Der Steg wird vorzugsweise dadurch gebildet, daß, bezogen auf das Zentrum der Membrane, in einem Winkelbereich von 80 bis 120° keine Durchgangsöffnung vorgesehen ist. In diesem Bereich strömen somit keine Verbrennungsprodukte unmittelbar gegen die Membrane, die in diesem Abschnitt unverletzt bleibt.

Eine andere Ausführungsform sieht vor, daß die Durchgangsöffnung sternförmig ist. Durch die sternförmige Ausbildung wird die Membrane im Zentrum zuerst geöffnet und reißt dann radial nach außen auf, was einen schnellen Öffnungsvorgang erlaubt.

Vorzugsweise haben die radialen Abschnitte zu ihren radial äußeren Enden eine abnehmende Breite. Dadurch wird ein größerer Anteil der Verbrennungsprodukte im Bereich des Zentrums des Sterns auf die Membrane treffen und dort zu einem schnellen Öffnen führen. Eine Verzögerung des Öffnungsvorgangs zum Rand hin ist trotz der abnehmenden Breite der radialen Abschnitte nicht zu erwarten, da der Druck des Fluids das Aufreißen der Membrane zusätzlich unterstützt, sobald diese im Zentrum geöffnet wurde.

Gemäß der bevorzugten Ausführungsform sind insgesamt drei radiale Abschnitte vorgesehen, die gleichmäßig umfangsmäßig voneinander beabstandet sind. Indem nur drei Abschnitte die Durchgangsöffnung bilden, werden relativ große Abschnitte der Membrane entstehen, die über einen großen Winkelbereich am Rand befestigt bleiben.

Vorzugsweise ist der Treibsatz außerhalb der Kammer angeordnet, wobei zusätzlich noch eine gemeinsame Ausströmkammer für Druckgas und Verbrennungsprodukte vorgesehen ist, in der sie sich vermischen. Diese Ausströmkammer kann ein geringes Volumen aufweisen.

Das Druckfluid ist bevorzugt Druckgas, und der Gasgenerator nach der Erfindung weist vorzugsweise kein Filter auf.

Die Düsenwandung wird durch einen scheibenförmigen Einsatz gebildet, der separat gefertigt ist und die Stirnwand einer Brennkammerwand bildet.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 einen Längsschnittansicht durch einen erfindungsgemäßen Gasgenerator,
- Figuren 2a und 2b eine Draufsicht und eine Perspektivansicht einer ersten Ausführungsform des beim erfindungsgemäßen Gasgenerator verwendbaren Einsatzes,
- Figur 2c eine Draufsicht auf die Membrane mit einer Aufreißlinie, die durch den Einsatz nach den Figuren 2a und 2b entsteht,
- Figuren 3a und 3b eine Draufsicht und eine Perspektivansicht einer zweiten Ausführungsform des beim erfindungsgemäßen Gasgenerator verwendbaren Einsatzes,
- Figur 3c eine Draufsicht auf die Membrane mit einer Aufreißlinie, die durch den Einsatz nach den Figuren 3a und 3b entsteht,
- Figuren 4a und 4b eine Draufsicht und eine Perspektivansicht einer dritten Ausführungsform eines beim erfindungsgemäßen Gasgenerators verwendbaren Einsatzes, und
- Figur 4c eine Draufsicht auf die Membrane mit einer Aufreißlinie, die durch den Einsatz nach den Figuren 4a und 4b entsteht.

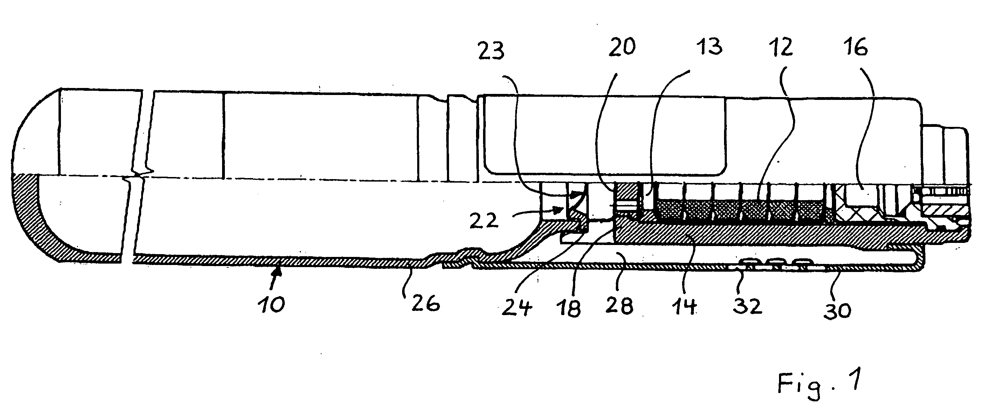

In Figur 1 ist ein Hybrid-Gasgenerator gezeigt, der eine längliche, zylindrische Gestalt hat. An einem axialen Ende ist eine mit Druckgas gefüllte Kammer 10 vorgesehen, am gegenüberliegenden Ende eine mit einem pyrotechnischen Treibsatz 12 gefüllte Brennkammer 13, die von einer Brennkammerwand 14 begrenzt ist. Ein Zünder 16 dient zum Anzünden des pyrotechnischen Treibsatzes 12. Die Stirnwand 18 der Brennkammer 13, die der Kammer 10 zugewandt ist, wird durch einen als separates Teil gefertigten scheibenförmigen Einsatz 20 gebildet, der mit dem Rest der Brennkammerwand 14 z.B. durch Schweißen verbunden ist.

Dem Einsatz 20 gegenüberliegend ist eine scheibenförmige Membrane 22, die etwas größer ist als der Einsatz 20 und die die Kammer 10 druckdicht verschließt. Die Membrane 22 besteht aus einem dünnen Häutchen 23 und einem mit diesem verbundenen Haltering, der den Rand 24 der Membrane bildet. Die Membrane 22 ist mit dem Rand 24 an der Wand 26 der Kammer 10 bleibend befestigt, vorzugsweise durch Schweißen. Radial außerhalb der Brennkammer 13 ist eine Ausströmkammer 28 vorgesehen, die durch ein Außengehäuse 30 begrenzt ist. Das Außengehäuse 30 hat mehrere große Auslaßöffnungen 32, über die, wie noch erläutert wird, das freigesetzte Gas in einen nicht gezeigten Gassack strömen kann. Wie zu erkennen ist, hat der Hybrid-Gasgenerator kein Filter, die Auslaßöffnungen 32 sind so groß, daß dadurch keine Verbrennungsprodukte oder andere beim Aktivieren des Gasgenerators freigesetzte Teilchen zurückgehalten werden könnten.

Die Membrane 22 wird durch die beim Abbrand des Treibsatzes 12 erzeugten Verbrennungsprodukte in vorbestimmbarer Weise geöffnet. Hierzu ist eine oder sind mehrere Durchgangsöffnungen im Einsatz 20 vorgesehen, die Düsen bilden, die den Strom an Verbrennungsprodukten gezielt auf enge Bereiche der Membrane 22 richten, um diese in diesen Bereichen linienförmig zu öffnen. In Figur 1 ist zu sehen, daß die Membrane 22 durch einen von außen auf sie einwirkenden Gasstrahl zerstört wird. Die Durchgangsöffnungen sind nicht als kreisförmige Bohrungen ausgebildet, sondern haben eine auf die jeweilige Aufreißlinie 45 abgestimmte, linienförmige, längliche Form. Die Durchgangsöffnungen verlaufen längs der Linien L. Die durch die Durchgangsöffnungen im Einsatz 20 gebildeten Düsen stellen eine Verengung zwischen dem pyrotechnischen Treibsatz 12 und der Membrane 22 dar.

Der Einsatz 20, der noch allgemeiner als Düsenwand bezeichnet wird, ist in den Figuren 2a bis 4d in verschiedenen Varianten dargestellt.

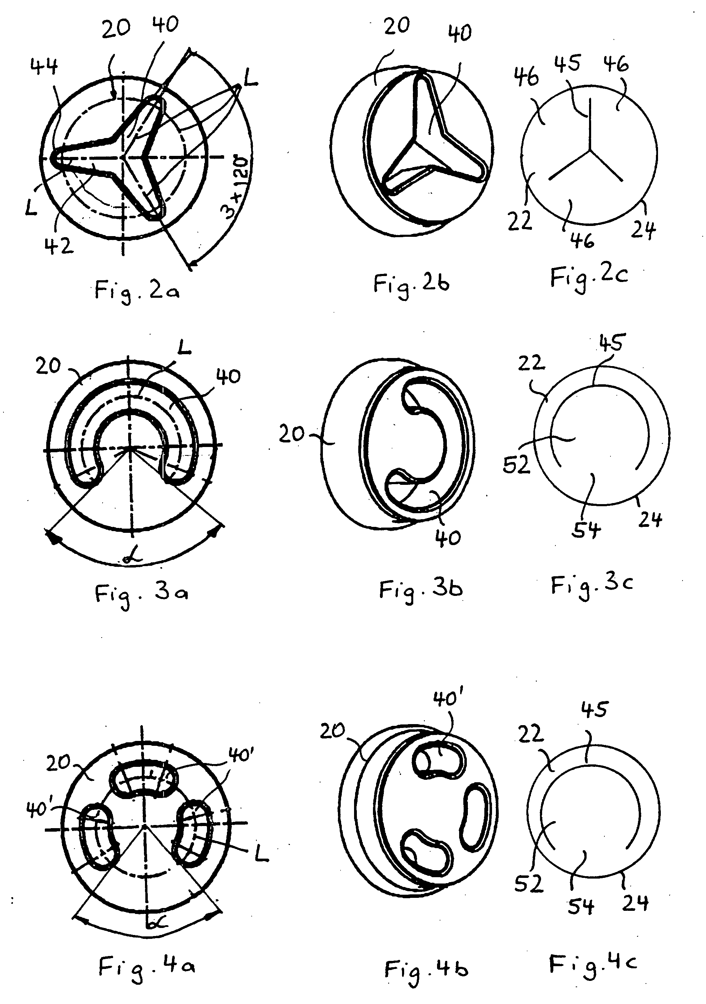

Gemäß der Variante in den Figuren 2a und 2b hat der Einsatz 20 eine sternförmige Durchgangsöffnung 40 mit drei umfangsmäßig gleichmäßig voneinander beabstandeten radialen Abschnitten 42. Der Mittelpunkt der sternförmigen Durchgangsöffnung 40 fällt mit der Mittelachse des scheibenförmigen Einsatzes 20 zusammen. Die drei radialen Abschnitte 42 haben jeweils zu ihrem radial äußeren Ende 44 hin eine kontinuierlich abnehmende Breite, die in Umfangsrichtung gemessen wird.

Beim Aktivieren des Zünders 16 wird der pyrotechnische Treibsatz 12 gezündet, und die entstehenden Verbrennungsprodukte verlassen über die Durchgangsöffnung 20 als sternförmiger Strahl die Brennkammer und treffen unmittelbar auf die Membrane 22 auf. Die Membrane wird zuerst im Zentrum durch die Verbrennungsprodukte zerstört. Die weitere Öffnung der Membrane 22 erfolgt längs der radialen Abschnitte 42. Die Membrane erhält damit sternförmige Aufreißlinien 45 (siehe Fig. 2c), so daß drei Abschnitte 46 der Membrane gebildet werden, die aber an ihrem radial äußeren Ende mit dem Rand 24 der Membrane verbunden bleiben, wenn sie nach dem Zerstören durch das ausströmende Druckgas in Richtung zur Brennkammer klappen. Es entstehen keine sogenannten freien Abschnitte, die mit dem Gasstrom mitgerissen werden.

Bei der Ausführungsform nach Figur 3a ist eine Durchgangsöffnung 40 vorgesehen, die sich parallel zum Rand 24 der Membrane erstreckt und ein offenes Ringsegment beschreibt, welches sich über 250° erstreckt, so daß in einem Winkelbereich α von etwa 110°, bezogen auf das Zentrum des Einsatzes 20, keine Durchgangsöffnung 40 vorgesehen ist. Beim Öffnen der Membrane 22 wird aus dieser ein scheibenförmiger Zentrumsabschnitt 52 herausgetrennt (Fig. 3c), der über einen Steg 54 mit dem Rand 24 befestigt bleibt, wenn Druckgas aus der Kammer 10 ausströmt.

Anstatt einer langen durchgehenden ringsegmentförmigen Durchgangsöffnung können auch mehrere, umfangsmäßig aneinandergrenzende, bogenförmige oder kürzere ringsegmentförmige Durchgangsöffnungen 40' gemäß Figur 4a vorgesehen sein, die, wie bei Figur 3a bis 3c, einen scheibenförmigen Zentrumsabschnitt 52 aus der Membrane 22 heraustrennen, der über einen Steg 54 mit dem Rand 24 befestigt bleibt (Fig. 4c). Auch bei dieser Ausführungsform ist in einem Winkelbereich α zwischen 80 bis 120° keine Durchgangsöffnung 40' vorgesehen, um einen ausreichend breiten Steg 54 zu erzeugen.

Das aus der Kammer 10 ausströmende Druckgas vermischt sich in der Ausströmkammer 28 mit den heißen Verbrennungsprodukten (vorzugsweise lediglich heißes Gas ohne heiße Partikel) und strömt über die Auslaßöffnungen 32 aus.

Die Membrane 22 hat keine durch eine geringere Wandstärke gebildete vorbestimmten Aufreißlinien, wie es im Stand der Technik teilweise vorgesehen ist. Somit kann die Membrane 22 kostengünstiger hergestellt sein und eine hohe Stabilität aufweisen.

## Patentansprüche

1. Hybrid-Gasgenerator mit
einer Kammer (10) mit unter Druck befindlichem Fluid, die durch eine zerstörbare Membrane (22) verschlossen ist,
einem pyrotechnischen Treibsatz (12), der bei Zündung die Membrane (22) zerstört, und
einer zwischen Treibsatz (12) und Membrane (22) vorgesehenen Düsenwandung mit wenigstens einer Durchgangsöffnung (40; 40'), durch die beim Zünden des Treibsatzes (12) entstehende Verbrennungsprodukte in Richtung Membrane (22) strömen,
**dadurch gekennzeichnet, daß**
die Durchgangsöffnung (40; 40') eine solche Form hat und zur Membrane (22) so ausgerichtet ist, daß beim Zerstören der Membrane (22) ausschließlich Abschnitte (46; 52) entstehen, die mit dem Rand (24) der Membrane (22) verbunden bleiben.

2. Hybrid-Gasgenerator nach Anspruch 1, **dadurch gekennzeichnet, daß** die Durchgangsöffnung (40; 40') im wesentlichen parallel zum Rand (24) der Membrane (22) verläuft.

3. Hybrid-Gasgenerator nach Anspruch 1 oder 2, **dadurch gekennzeichnet, daß** die Durchgangsöffnung (40; 40') ein offenes Ringsegment ist, so daß aus der Membrane (22) ein Zentrumsabschnitt (52) herausgetrennt wird, der über einen Steg (54) mit dem Rand (24) der Membrane (22) verbunden bleibt.

4. Hybrid-Gasgenerator nach Anspruch 3, **dadurch gekennzeichnet, daß** mehrere ringsegmentförmige, umfangsmäßig aneinander angrenzende Durchgangsöffnungen (40') vorgesehen sind, von denen wenigstens zwei einen solch großen Abstand haben, daß ein aus der Membrane (22) herausgetrennter Zentrumsabschnitt (52) über einen Steg (54) mit dem Rand (24) der Membrane (22) verbunden bleibt.

5. Hybrid-Gasgenerator nach Anspruch 3 oder 4, **dadurch gekennzeichnet, daß** der erzeugte Steg (54) dadurch gebildet ist, daß, bezogen auf das Zentrum der Membrane (22), in einem Winkelbereich (α) von 80 bis 120° keine Durchgangsöffnung (40; 40') vorgesehen ist.

6. Hybrid-Gasgenerator nach Anspruch 1, **dadurch gekennzeichnet, daß** die Durchgangsöffnung (40) sternförmig ist.

7. Hybrid-Gasgenerator nach Anspruch 6, **dadurch gekennzeichnet, daß** die radialen Abschnitte (22) der sternförmigen Durchgangsöffnung (40) zu ihrem radial äußeren Ende (44) hin eine abnehmende Breite haben.

8. Hybrid-Gasgenerator nach Anspruch 6 oder 7, **dadurch gekennzeichnet, daß** die sternförmige Durchgangsöffnung (40) insgesamt drei radiale Abschnitte (42) hat, die umfangsmäßig gleichmäßig voneinander beabstandet sind.

9. Hybrid-Gasgenerator nach einem der vorhergehenden Ansprüche, **dadurch gekennzeichnet, daß** der Treibsatz (12) außerhalb der Kammer (10) angeordnet ist und eine gemeinsame Ausströmkammer (28) für Druckfluid und die Verbrennungsprodukte vorgesehen ist, in der sich diese vermischen.

10. Hybrid-Gasgenerator nach einem der vorhergehenden Ansprüche, **dadurch gekennzeichnet, daß** das Druckfluid Druckgas ist.

11. Hybrid-Gasgenerator nach einem der vorhergehenden Ansprüche, **dadurch gekennzeichnet, daß** er kein Filter aufweist.

12. Hybrid-Gasgenerator nach einem der vorhergehenden Ansprüche, **dadurch gekennzeichnet, daß** die Düsenwandung ein scheibenförmiger Einsatz (20) ist, der die Stirnwand (18) einer Brennkammerwand (14) bildet.

13. Hybrid-Gasgenerator nach einem der vorhergehenden Ansprüche, **dadurch gekennzeichnet, daß** die Durchgangsöffnung (40) eine linienförmige Öffnung ist.

## Claims

1. A hybrid gas generator comprising
a chamber (10) that contains pressurized fluid and that is sealed off by a rupturable membrane (22),
a pyrotechnical propellant charge (12) that ruptures the membrane (22) when it is ignited, and
a nozzle wall provided between the propellant charge (12) and the membrane (22) and having at least one passage opening (40; 40') through which combustion products generated upon ignition of the propellant charge (12) flow towards the membrane (22),
**characterized in that**
the passage opening (40; 40') has such a shape and is oriented with respect to the membrane (22) in such a way that, when the membrane (22) is ruptured, sections (46; 52) are formed that all remain connected to the edge (24) of the membrane (22).

2. The hybrid gas generator according to Claim 1, **characterized in that** the passage opening (40; 40') runs essentially parallel to the edge (24) of the membrane (22).

3. The hybrid gas generator according to Claim 1 or 2, **characterized in that** the passage opening (40; 40') is an open ring segment so that a center section (52) is separated from the membrane (22) and remains connected to the edge (24) of the membrane (22) via a web (54).

4. The hybrid gas generator according to Claim 3, **characterized in that** several passage openings (40') are provided which are in the shape of ring segments and are adjacent to each other in the circumferential direction, at least two of which are at such a large distance from each other that a center section (52) separated from the membrane (22) remains connected to the edge (24) of the membrane (22) via a web (54).

5. The hybrid gas generator according to Claim 3 or 4, **characterized in that** the web (54) produced is formed **in that**, as related to the center of the membrane (22), there is no passage opening (40; 40') in an area enclosing an angle (α) from 80° to 120°.

6. The hybrid gas generator according to Claim 1, **characterized in that** the passage opening (40) is star-shaped.

7. The hybrid gas generator according to Claim 6, **characterized in that** the radial sections (22) of the star-shaped passage opening (40) have a decreasing width towards their radially outer ends (44).

8. The hybrid gas generator according to Claim 6 or 7, **characterized in that** the star-shaped passage opening (40) has a total of three radial sections (42) which are at a uniform distance from each other along the circumference.

9. The hybrid gas generator according to any of the preceding claims, **characterized in that** the propellant charge (12) is arranged outside of the chamber (10) and a shared outflow chamber (28) is provided for pressurized fluid and the combustion products in which they mix with each other.

10. The hybrid gas generator according to any of the preceding claims, **characterized in that** the pressurized fluid is pressurized gas.

11. The hybrid gas generator according to any of the preceding claims, **characterized in that** it does not have a filter.

12. The hybrid gas generator according to any of the preceding claims, **characterized in that** the nozzle wall is a disk-shaped insert (20) that forms the front wall (18) of a combustion chamber wall (14).

13. The hybrid gas generator according to any of the preceding claims, **characterized in that** the passage opening (40) is a linear opening.

## Revendications

1. Générateur de gaz hybride, comprenant
une chambre (10) avec du fluide se trouvant sous pression, qui est fermée par une membrane (22) destructible à l'amorçage,
une charge propulsive (12) pyrotechnique qui détruit la membrane (22) à l'amorçage, et
une paroi de tuyère prévue entre la charge propulsive (12) et la membrane (22), avec au moins une ouverture de passage (40 ; 40') à travers laquelle des produits de combustion s'écoulent en direction de la membrane (22) lors de l'amorçage de la charge propulsive (12),
**caractérisé en ce que**
l'ouverture de passage (40 ; 40') a une forme telle et est orienté vers la membrane (22) de telle sorte que lors de la destruction de la membrane (22), il se forme exclusivement des tronçons (46 ; 52) qui restent reliés avec le bord (24) de la membrane (22).

2. Générateur de gaz hybride selon la revendication 1, **caractérisé en ce que** l'ouverture de passage (40 ; 40) s'étend sensiblement parallèlement au bord (24) de la membrane (22).

3. Générateur de gaz hybride selon la revendication 1 ou 2, **caractérisé en ce que** l'ouverture de passage (40 ; 40') est un segment annulaire ouvert, de sorte que depuis de la membrane (22) est séparé un tronçon central (52) qui reste relié au bord (24) de la membrane (22) par l'intermédiaire d'une entretoise (54).

4. Générateur de gaz hybride selon la revendication 3, **caractérisé en ce qu'**il est prévu plusieurs ouvertures de passage (40') en forme de segments annulaires et adjacentes les unes aux autres sur la périphérie, dont au moins deux ont une distance si grande qu'un tronçon central (52) séparé hors de la membrane (22) reste relié au bord (24) de la membrane (22) par l'intermédiaire d'une entretoise (54).

5. Générateur de gaz hybride selon la revendication 3 ou 4, **caractérisé en ce que** la traverse (54) produite est formée par le fait que par rapport au centre de la membrane (22), il n'est pas prévu d'ouverture de passage (40 ; 40') sur une zone angulaire (α) de 80 à 120°.

6. Générateur de gaz hybride selon la revendication 1, **caractérisé en ce que** l'ouverture de passage (40) est en forme d'étoile.

7. Générateur de gaz hybride selon la revendication 6, **caractérisé en ce que** les tronçons (22) radiaux de l'ouverture de passage (40) en forme d'étoile ont une largeur qui diminue vers leur extrémité (4) radialement extérieure.

8. Générateur de gaz hybride selon la revendication 6 ou 7, **caractérisé en ce que** l'ouverture de passage (40) en forme d'étoile a dans l'ensemble trois tronçons radiaux (42) qui sont espacés régulièrement les uns des autres sur la périphérie.

9. Générateur de gaz hybride selon l'une des revendications précédentes, **caractérisé en ce que** la charge propulsive (12) est agencée à l'extérieur de la chambre (10), et **en ce qu'**il est prévu pour du fluide sous pression et pour des produits de combustion une chambre de sortie (28) commune dans laquelle ceux-ci se mélangent.

10. Générateur de gaz hybride selon l'une des revendications précédentes, **caractérisé en ce que** le fluide sous pression est du gaz sous pression.

11. Générateur de gaz hybride selon l'une des revendications précédentes, **caractérisé en ce qu'**il ne présente pas de filtre.

12. Générateur de gaz hybride selon l'une des revendications précédentes, **caractérisé en ce que** la paroi de tuyère est un insert (20) en forme de disque qui forme la paroi frontale (18) d'une paroi de chambre de combustion (14).

13. Générateur de gaz hybride selon l'une des revendications précédentes, **caractérisé en ce que** l'ouverture de passage (40) est une ouverture en forme de ligne.
